# FASCICULE DE BREVET EUROPEEN

(11) **EP 2 559 011 B1**
(45) Date de publication et mention de la délivrance du brevet: **20.12.2017**
(21) Numéro de dépôt: 11731411.2
(22) Date de dépôt: 07.04.2011
(51) Int. Cl.: G07F 1/06, A45C 13/20

(54) **ANTIVOL RELIE A UN JETON DE DEVERROUILLAGE**
MIT EINER ENTSPERRUNGSVORRICHTUNG VERBUNDENE DIEBSTAHLSICHERUNG
ANTI-THEFT DEVICE CONNECTED TO AN UNLOCKING TOKEN

(30) Priorité: 16.04.2010 FR 1001617
(43) Date de publication de la demande: 20.02.2013
(73) Titulaire: Amalric, Bernard, 31240 L'Union (FR); Cannac, Frédéric, 31660 Buzet sur Tarn (FR); Taillefer, Jean-Paul, 31660 Buzet sur Tarn (FR)
(72) Inventeur: Amalric, Bernard, 31240 L'Union (FR); Cannac, Frédéric, 31660 Buzet sur Tarn (FR); Taillefer, Jean-Paul, 31660 Buzet sur Tarn (FR)
(74) Mandataire: Jeannet, Olivier
(86) Numéro de dépôt international: PCT/FR2011/000202
(87) Numéro de publication internationale: WO 2011/128523

(56) Documents cités:
- WO-A1-2007/141417
- DE-A1- 4 406 713
- DE-U1- 9 403 809
- FR-A1- 2 843 692
- FR-A1- 2 896 233
- GB-A- 2 263 135
- GB-A- 2 419 918
- GB-A- 2 451 659
- US-A- 5 915 631

## Description

La présente invention concerne un **antivol relié à un jeton de déverrouillage** de chariot, par exemple de marque « caddie® », ou autre mobile.

Généralement les chariots de type caddie® que l'on trouve dans nos supermarchés, ou bien certains chariots ou autres mobiles tels que vélos, sont équipés d'un système d'ancrage avec déverrouillage qui permet de relier soit une série de caddies® emboités entre eux par des chaines de sécurité, soit le mobile à une borne d'ancrage. Lorsque l'on veut séparer le mobile par rapport à son poste fixe, il suffit d'introduire une pièce de monnaie ou bien un jeton de forme et de dimensions permettant le déverrouillage du système d'ancrage, dans le réceptacle du système d'ancrage. Cette action a pour effet de déverrouiller le système par simple libération de la chainette qui relie ce mobile à un autre mobile ou à un poste fixe. Ce système peut assurer ainsi une fonction d'antivol du mobile lui même mais, les utilisateurs de ces caddies® ou autres mobiles qui y déposent imprudemment leur sacoche ou sac à main ou l'accrochent simplement, s'exposent malheureusement à des actes de malveillance. En effet cette mise en évidence attire bien trop souvent la convoitise de personnes peu scrupuleuses n'hésitant pas à dérober ces biens.

La présente invention permet très simplement de palier cet inconvénient en équipant le jeton de déverrouillage du caddie®, du chariot ou du mobile, d'un lien mécanique souple et résistant qui le rend solidaire de l'objet que l'on veut protéger contre le vol.

Le document GB 2 451 659 décrit un dispositif à sangle ayant un crochet à chaque extrémité pour protéger et sécuriser des sacs contre le vol. Ce dispositif à sangle peut être utilisé pour attacher la sangle à un sac et à un chariot de supermarché.

### DESCRIPTION TECHNIQUE

La présente invention concerne un dispositif antivol tel que revendiqué dans la revendication indépendante 1.

L'antivol selon l'invention comprend essentiellement un jeton assurant la fonction principale de déverrouillage du système d'ancrage qui relie le caddie® ou chariot ou mobile quelconque à un poste fixe ou bien à un autre mobile, ce jeton étant équipé d'un lien mécanique souple et résistant qui assure en parallèle la protection antivol de l'objet déposé ou accroché à ce mobile.

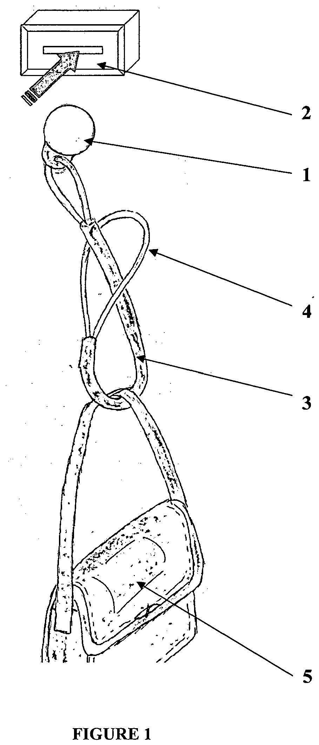

La **Fig.1** montre le jeton **Rep.1** prêt à être introduit dans le système d'ancrage à verrou **Rep.2** du mobile et relié par un lien **Rep.3** comprenant une boucle **Rep.4,** passant ensuite au travers des anses du sac **Rep**.**5** à protéger contre le vol.

La **Fig.2** montre une amélioration pratique où l'objet à protéger contre le vol **Rep**.**5** est préalablement équipé d'une languette **Rep.6** comprenant un oeillet **Rep.7** permettant ainsi de maintenir accroché en permanence cet ensemble jeton avec lien antivol.

Le jeton **Rep.1**, tel que montré sur la **Fig**.**1**, permettant lorsqu'il est mis en place dans le dispositif d'ancrage du mobile **Rep.2,** d'en assurer le déverrouillage. Il est muni d'un lien souple **Rep.3** solidement fixé, en acier ou en tout autre matériau très résistant, tel que câble ou chaînette ou produit synthétique armé, lui conférant ainsi une fonction de protection antivol d'éventuel objet déposé ou accroché au mobile **Rep**.**5**. Ce lien mécanique souple possède en son extrémité une boucle ou un anneau **Rep.4.** Ainsi lorsqu'un utilisateur du mobile veut se protéger du vol de sa sacoche ou sac à main qui y est déposé, avant introduction du jeton, il fait passer le lien au travers des anses ou autres bretelles du sac, ou au travers de tout autre élément résistant du sac, puis repasser ce brin dans la boucle ou anneau de sorte qu'une fois introduit dans le dispositif d'ancrage à verrou du mobile, ou lié à tout autre objet structural solide et sécurisé, le sac rendu indissociable du mobile, ne peut pas être dérobé.

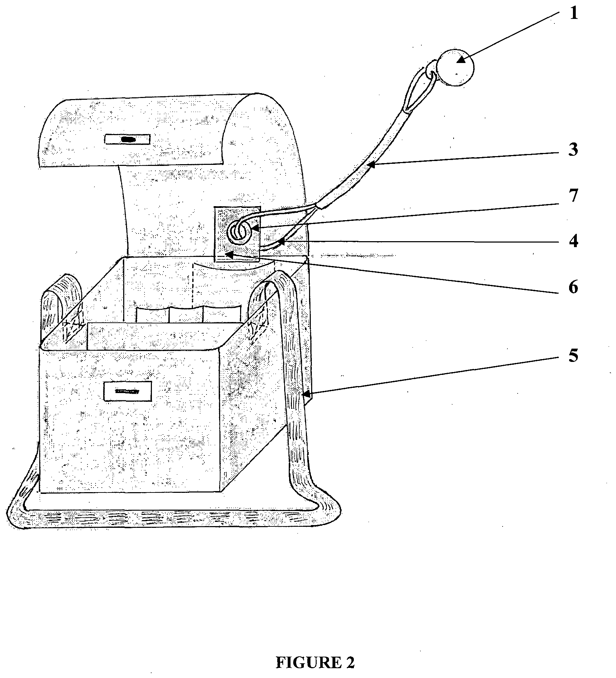

D'un point de vue pratique, tel que montré sur la **Fig.2****,** il est possible de rendre l'ensemble jeton avec lien, imperdable, en le maintenant accroché à une languette **Rep.6** comprenant un oeillet **Rep.7** équipant par exemple l'objet à protéger contre le vol **Rep**.**5**.

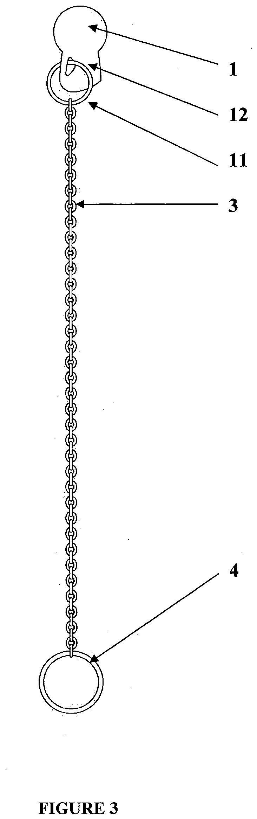

La **Fig.3** montre une version plus aboutie de l'antivol relié à un jeton de déverrouillage. Dans cette version le lien est constitué d'une chaînette **Rep.3** résistante, reliant le jeton **Rep1** en son extrémité à un anneau brisé double **Rep.4** à l'autre extrémité, facilitant le montage et l'utilisation. On notera également le design d'une queue **Rep.12** prolongeant le jeton, facilitant sa manipulation lors de l'extraction ou introduction dans le système de déverrouillage du chariot.

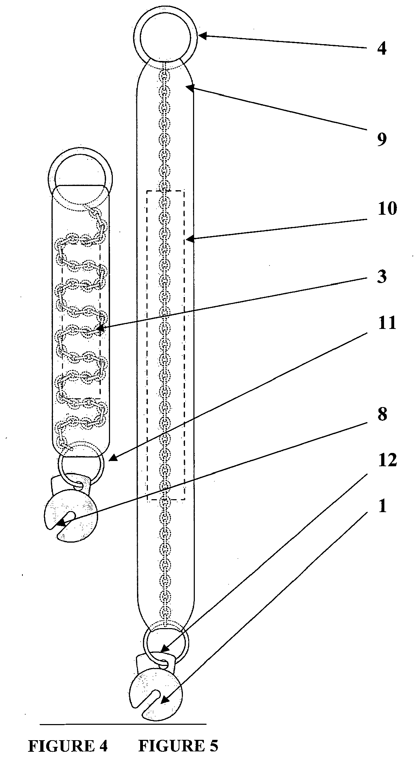

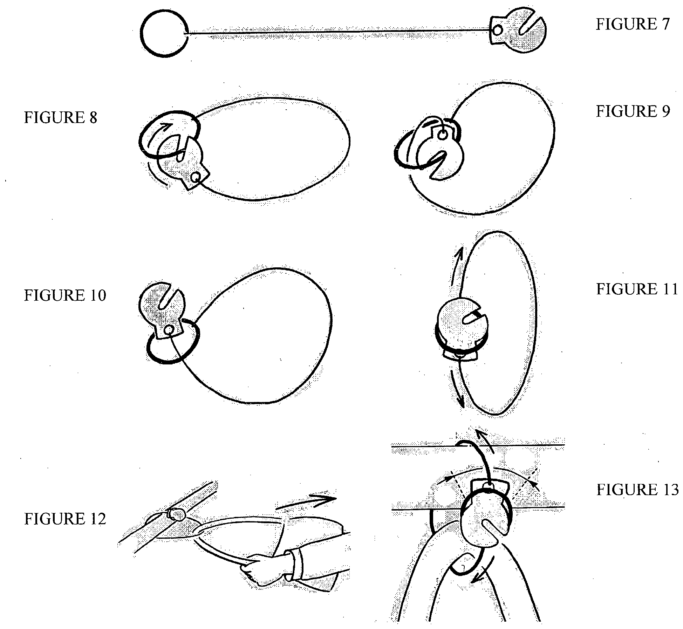

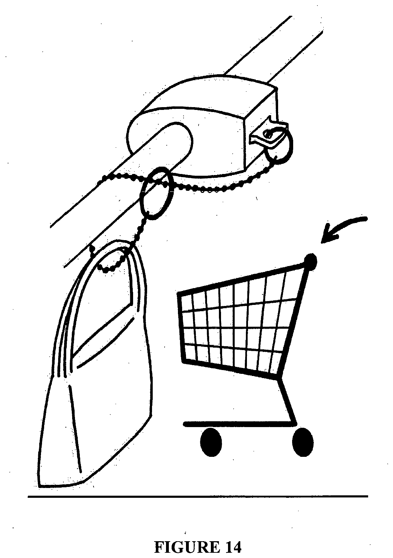

Une autre version améliorée du dispositif est représentée par les **Fig.4** et **Fig**.**5**. L'ensemble est constitué d'un jeton **Rep**.**1** muni d'une fente radiale **Rep**.**8**, d'un anneau **Rep.4** de diamètre intérieur, inférieur à celui du jeton, mais cependant de dimension supérieure à la distance séparant le fond de la fente du jeton à la tangente opposée de son cercle extérieur et d'une chaînette **Rep.3** reliant le jeton à l'anneau. Une housse élastique **Rep.9** enveloppe la chaînette conditionnée en zigzag, tel que montré en **Fig.4****.,** la longueur au repos de la housse étant bien inférieure à celle de la chaînette, tel que montré en **Fig.5****,** permettant d'avoir un encombrement réduit de l'ensemble. La queue **Rep.12** prolonge la partie arrière du jeton dans laquelle vient s'accrocher l'anneau **Rep**.**11.** L'orientation angulaire de la fente par rapport à la direction axiale de cette queue est judicieusement définie d'une part, de sorte qu'une fois introduit dans le dispositif de déverrouillage, l'ensemble queue et anneau **Rep.11** assure une fonction d'anti rotation, garantissant la bonne orientation du jeton empêchant ainsi tout déverrouillage intempestif, mais d'autre part, comme montré **Fig**.**11**, lorsque le jeton n'est plus en place dans le système de déverrouillage, lors d'une mise en tension intempestive de l'objet à protéger **Rep**.**5**, la queue **Rep.12** se met naturellement dans l'anneau **Rep.4,** et la fente ainsi désaxée ne permet pas au jeton de se libérer naturellement. Les figures **Fig.7, Fig.8, Fig.9, Fig.10, Fig.11, Fig.12, Fig.13****,** montrent la séquence du mode opératoire pour utiliser cet antivol à jeton fendu : en premier lieu le jeton passe au travers de l'anse du sac à protéger **Rep5**, vient ceinturer ensuite un élément structural du chariot. Le jeton grâce à sa fente peut passer au travers de l'anneau **Rep.4,** de sorte que l'ensemble constitue une véritable ceinture fermée sécurisant le sac par rapport à la structure du chariot. Enfin le jeton est mis en place dans le dispositif de déverrouillage du chariot. Le sac est ainsi doublement protégé, d'une part par le dispositif de déverrouillage et d'autre part par son amarrage à la structure du chariot tel qu'en cas de tentative de vol à l'arrachée par extraction forcée du jeton, l'anneau, de plus petit diamètre que celui du jeton, empêche sa libération immédiate. La housse élastique permet de réaliser un moyen élégant de stockage peu encombrant lorsqu'elle est au repos et de plus, sa surface bien visible peut servir de support publicitaire **(Rep10).**

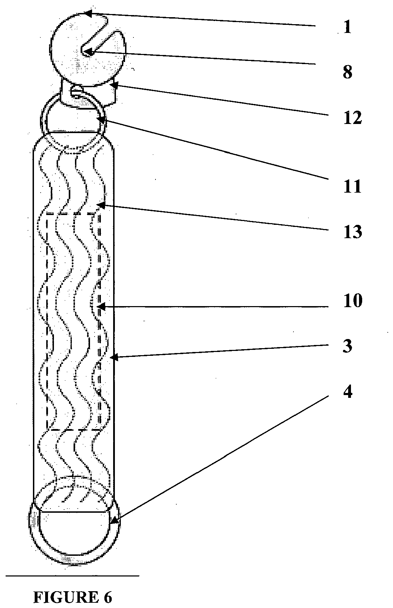

On remarquera que cette version d'antivol basé sur le principe du jeton fendu n'exige plus d'être exclusivement utilisée avec présence d'un dispositif de déverrouillage dès lors qu'on se contente d'assurer non plus une double protection de son sac ou sacoche mais d'en assurer sa simple protection. En effet le fait de pouvoir l'amarrer en ceinturant un quelconque objet structural solide et sécurisé lui confère une qualité de protection universelle.
Une autre variante possible et simplifiée de cet antivol à double effet, montrée sur la figure **Fig.6****,** peut être réalisée en ce que le lien souple **(Rep.3)** soit en textile en matériau synthétique armé qui comporte des fibres suffisamment résistantes assurant implicitement la fonction d'auto résistance mécanique en lieu et place de la chaînette.

## Revendications

1. Dispositif antivol, comprenant un jeton (1) apte à déverrouiller un système d'ancrage de chariots de supermarchés ou d'autres objets mobiles, ce système d'ancrage comprenant un boîtier d'ancrage à verrou (2), dans lequel le jeton est apte à être introduit pour déverrouiller un tel chariot ou autre objet,
**caractérisé en ce qu'**il comprend un lien souple et résistant (3), relié au jeton (3) et comprenant une boucle ou un anneau (4).

2. Dispositif selon la revendication 1, **caractérisé en ce que** le lien (3) est en acier ou tout autre matériau très résistant semblable lui conférant une fonction de protection antivol.

3. Dispositif selon la revendication 2, **caractérisé en ce que** le lien (3) est sous la forme d'un câble ou d'une chaînette ou est en un matériau synthétique armé.

4. Dispositif selon l'une des revendications 1 à 3, **caractérisé en ce que** ledit anneau (4) est un anneau brisé double.

5. Dispositif selon l'une des revendications 1 à 4, **caractérisé en ce que** le jeton (1) comprend une queue (12) le prolongeant.

6. Dispositif selon l'une des revendications 1 à 5, **caractérisé en ce que** :
- le jeton (1) est circulaire, ayant un diamètre, et comprend une fente radiale (8) ayant un fond et une queue (12) le prolongeant ;
- l'anneau (4) a un diamètre intérieur inférieur au diamètre du jeton mais supérieure à la distance séparant le fond de la fente (8) et l'ouverture de cette fente sur le bord extérieur du jeton (1) ; la fente (8) permet que le jeton (1) soit apte à être engagé sur une portion de l'anneau (4), permettant ainsi un passage du jeton (1) et de la queue (12) au travers de l'anneau (4).

7. Dispositif selon l'une des revendications 1 à 6, **caractérisé en ce que** le lien (3) est formé par une chaînette logée dans une housse élastique (9), cette chaînette étant conditionnée en zigzag dans la housse (9), et la longueur au repos de la housse (9) étant bien inférieure à celle de la chaînette.

8. Dispositif selon l'une des revendications 5 ou 6, **caractérisé en ce que** le lien (3) est relié à la queue (12) par un anneau (11).

## Patentansprüche

1. Diebstahlsicherung mit einem Token (1), das in der Lage ist, ein Verankerungssystem von Supermarktwagen oder anderen bewegten Gegenständen zu entriegeln, wobei das Verankerungssystem ein Verriegelungsankergehäuse (2) aufweist, in dem das Token einsteckbar ist, um einen solchen Wagen oder einen anderen zu entriegeln Gegenstand
**dadurch gekennzeichnet, dass** sie eine flexible und widerstandsfähige Verbindung (3) umfasst, die mit dem Token (3) verbunden ist und eine Schlaufe oder einen Ring (4) umfasst.

2. Vorrichtung nach Anspruch 1, **dadurch gekennzeichnet, daß** die Verbindung (3) aus Stahl oder einem beliebigen ähnlichen anderen, starken Material besteht, was eine Anti-Diebstahl-Schutzfunktion ergibt.

3. Vorrichtung nach Anspruch 2, **dadurch gekennzeichnet, dass** die Verbindung (3) als Kabel oder Kette ausgebildet ist oder aus einem verstärkten Kunststoff besteht.

4. Vorrichtung nach einem der Ansprüche 1 bis 3, **dadurch gekennzeichnet, dass** der Ring (4) ein doppelter Bruchring ist.

5. Vorrichtung nach einem der Ansprüche 1 bis 4, **dadurch gekennzeichnet, dass** der Token (1) einen ihn erstreckenden Schwanz (12) aufweist.

6. Vorrichtung nach einem der Ansprüche 1 bis 5, **dadurch gekennzeichnet, dass**:
- der Token (1) kreisförmig ist und einen Durchmesser aufweist und einen radialen Schlitz (8) mit einem Boden und einem ihn erstreckenden Schwanz (12) aufweist;
- der Ring (4) einen Innendurchmesser aufweist, der kleiner ist als der Durchmesser des Tokens, aber größer als der Abstand, der den Boden des Schlitzes (8) von der Öffnung dieses Schlitzes (8) an der Außenkante des Tokens (1) trennt; der Schlitz (8) ermöglicht es, dass das Token (1) an einem Abschnitt des Rings (4) in Eingriff gebracht werden kann, wodurch der Durchgang des Tokens (1) und des Schwanzes (12) durch den Ring (4) ermöglicht wird.

7. Vorrichtung nach einem der Ansprüche 1 bis 6, **dadurch gekennzeichnet, dass** die Verbindung (3) durch eine in einer elastischen Abdeckung (9) untergebrachte Kette gebildet ist, wobei die Kette zickzackförmig in der Abdeckung (9)verpackt ist, wobei die Länge im Ruhezustand des Abdeckung (9) wesentlich geringer ist als die von der Kette.

8. Vorrichtung nach der Ansprüche 5 oder 6, **dadurch gekennzeichnet, dass** die Verbindung (3) mit dem Schwanz (12) durch einen Ring (11) verbunden ist.

## Claims

1. Anti-theft device comprising a token (1) capable to unlock an anchoring system of supermarket trolleys or other moving objects, said anchoring system comprising a lock anchor housing (2) in which the token is capable to be inserted to unlock such trolley or other object
**characterized in that** it comprises a flexible and resistant link (3) connected to the token (3) and comprising a loop or a ring (4).

2. Device according to claim 1, **characterized in that** the link (3) is made of steel or any other similar strong resistant material giving it an anti-theft protection function.

3. Device according to claim 2, **characterized in that** the link (3) is in the form of a cable or chain or is made of a reinforced synthetic material.

4. Device according to anyone of claims 1-3, **characterized in that** said ring (4) is a double broken ring.

5. Device according to anyone of claims 1-4, wherein the token (1) comprises a tail (12) extending therefrom.

6. Device according to one of claims 1-5, **characterized in that**:
- the token (1) is circular, having a diameter, and comprises a radial slot (8) having a bottom and a tail (12) extending therefrom;
- the ring (4) has an inside diameter smaller than the diameter of the token but greater than the distance separating the bottom of the slot (8) from the opening of this slot on the outer edge of the token (1); the slot (8) allows the token (1) to be able to be engaged on a portion of the ring (4), thus allowing passage of the token (1) and the tail (12) through the ring (4).

7. Device according to one of claims 1-6, **characterized in that** the link (3) is formed by a chain housed in an elastic cover (9), the chain being packaged in a zigzag manner in the cover (9), the length at rest of the cover (9) being much less than that of the chain.

8. Device as claimed in claim 5 or 6, **characterized in that** the link (3) is connected to the tail (12) by a ring (11).
